# EUROPÄISCHE PATENTANMELDUNG

(11) **EP 1 303 018 A1**
(43) Veröffentlichungstag der Anmeldung: **16.04.2003**
(21) Anmeldenummer: 02400044.0
(22) Anmeldetag: 10.10.2002
(51) Int. Cl.: H02G 3/22

(54) **Elastische Tülle für einen Kabelstrang**

(30) Priorität: 12.10.2001 DE 10150634
(71) Anmelder: Diehl Remscheid GmbH & Co., D-42857 Remscheid (DE)
(72) Erfinder: Engel, Michael, 17375 Altwarp (PT); Pepping, Karl-Heinz, 53937 Gemünd (DE)
(74) Vertreter: Stammler, Wolfgang (DE), Dipl.-Phys.

(57) **Zusammenfassung**

Bei der Durchführung eines Kabelstranges (2) vom Innenraum (112) eines Kraftfahrzeuges zum Motorraum (113) gibt es Probleme bei Längswasserabdichtungen des Kabelstranges (2). Diese werden durch eine Tülle (1) beseitigt, die über einen Fächer (3) mit aufgespleistem Kabelstrang (2) gestülpt und mit einer Dichtmasse (21) gefüllt ist.

## Beschreibung

Die Erfindung bezieht sich auf eine elastische Tülle für einen Kabelstrang nach dem Oberbegriff des Anspruchs 1.

Aus der DE 296 13 006 U1 ist eine Tülle in Form eines Rollbalges bekannt. Dieser Rollbalg dient zum Abdichten eines durch eine Trennwand eines Kraftfahrtzeuges hindurchführenden, axial verschiebbaren Betätigungselementes. Mit einem derartigen Rollbalg wird die Aufgabe gelöst, Geräusche vom Motorraum möglichst gut abzuschirmen und trotzdem keine Rückstellkräfte auf das axial zu verschiebende Betätigungselement auszuüben.

Bei der Durchführung eines Kabelstranges vom Innenraum eines Kraftfahrtzeuges zum Motorraum gibt es Probleme bei Längswasserabdichtung des Kabelstranges. Hierbei kriecht Wasser innerhalb des Kabelbündels vom Naßbereich zum Trockenbereich aufgrund der Kapillarwirkung.

Verschiedene Verfahren sind dazu bekannt.
Das Kabel wird im Naßbereich ca. 5 bis 30 Zentimeter lang bandagiert. Diese Methode ist am verbreitetsten, jedoch nicht sicher.

Das Kabel wird mittels Knetmasse innerhalb des Kabelbündels abgedichtet. Diese Montage ist sehr kostenaufwendig.

Der Kabelstrang wird in einem Werkzeug mit Polyurethan umspritzt. Hierzu benötigt man eine Vielzahl einzelner Werkzeuge, die nacheinander befüllt werden.

Durch die lange Abbindezeit von mehreren Minuten im Werkzeug stellt diese Lösung zwar eine sichere aber kostspielige Variante dar. Die Technik ist teuer und stellt im Produktionsprozeß ein Nadelöhr dar.

Aufgabe der Erfindung ist daher eine Tülle vorzuschlagen, die eine absolut kriechwasserdichte Abdichtung eines Kabelstrangs erlaubt und zeit- und kostengünstig fertigbar ist.

Die Erfindung löst diese Aufgabe entsprechend den kennzeichnenden Merkmalen des Anspruchs 1.

Vorteilhafte Weiterbildungen der Erfindung sind den Unteransprüchen zu entnehmen.

Nachdem die Tülle als verlorene Form verwendet wird, liegt eine große Kosteneinsparung vor. Es liegen daher keine Kosten für Werkzeuge vor. Der Injektionsschlauch ermöglicht ein sauberes Füllen der Tülle. Nacharbeiten sind nicht erforderlich. Durch das Schlitz- und Kammersystem in der Tülle liegt eine definierte, prozesssichere Verteilung der Dichtmasse in der Tülle vor. Die gleichmäßige Druckverteilung der Dichtmasse innerhalb der Tülle ist gewährleistet. Der Schaum gewährleistet die notwendige Abdichtung gegen Schlagwasser und Kriechwasser. Beschädigungen der Kabel im Bereich der Tülle sind durch die geschützte Kabelvereinzelung ausgeschlossen.

Ausführungsbeispiele der Erfindung sind in der Zeichnung dargestellt und nachfolgend beschrieben. Es zeigt
- Figur 1: eine Tülle mit einem Kabelstrang,
- Figur 2: die Tülle nach Figur 1 mit Kabelstrang im Schnitt II-II,
- Figur 3: einen Fächer im Schnitt III-III nach Figur 2 und
- Figur 4: im Detail eine Kabelführung an einem Steg, entsprechend einem Schnitt IV-IV nach Figur 3.

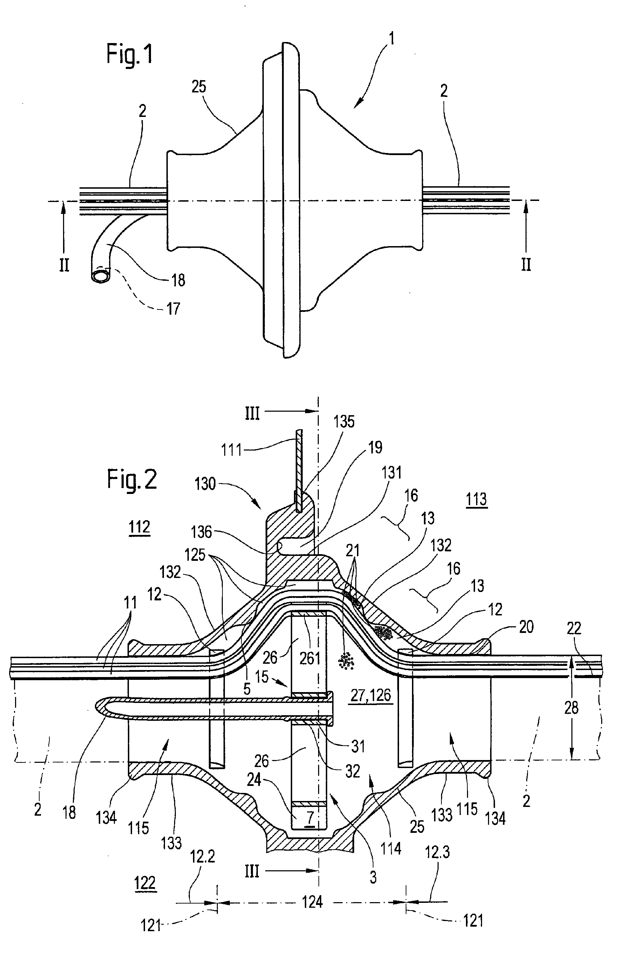

Entsprechend Figur 1 besteht eine Tülle 1 aus elastischem Gummi und sitzt in einer Wand 111. Die Wand 111 trennt einen Motorraum 113 von einem Innenraum 112 eines Kraftfahrzeuges. Ein Kabelstrang 2 trägt die Tülle 1. Der Kabelstrang 2 ist aus einer Anzahl von einzelnen Kabeln 11 gebildet.

Die Tülle 1 mit Wand 25 weist innen einen etwa kreisförmigen Längsquerschnitt 114 mit anschließenden Öffnungen 115 auf. Deren Querschnitte sind rechteckig bzw. zylindrisch. Der kreisförmige Längsquerschnitt 114 ist durch eine Haltevorrichtung 130 mit verstärktem Wandabschnitt 131 zwei konischen Außenwänden 132 und zwei zylindrischen Mundstücken 133 mit Verstärkungsring 134 gebildet.

Die Tülle 1 besitzt weiterhin durch Verstärkungen gebildete Abstandshalter 5 mit benachbarten Kammern 13 sowie benachbarte elastische Ringzonen 16.

Ein Fächer 3 besteht aus einem zentralen Ring 31 mit durchgehender Bohrung 32 und daran sitzenden, radialen Stegen 26, sowie einen Umfangsring 261. Dieser bildet mit weiteren Stegen 7 äußere Wannen 24. In der Bohrung 32 ist ein Schlauch 18 formschlüssig befestigt. Der Schlauch 18 ist mit einem Rückschlagventil 17 versehen.

Die Haltevorrichtung 130 besteht im wesentlichen aus einer Lippenanordnung 135 und einem dünnen Membransteg 136. Der Membransteg 136 erlaubt Lageveränderungen der Tülle 1 als Toleranzausgleich zwischen Wandabschnitt 131 und Wand 111 und dient im übrigen zur Schwingungsdämpfung.

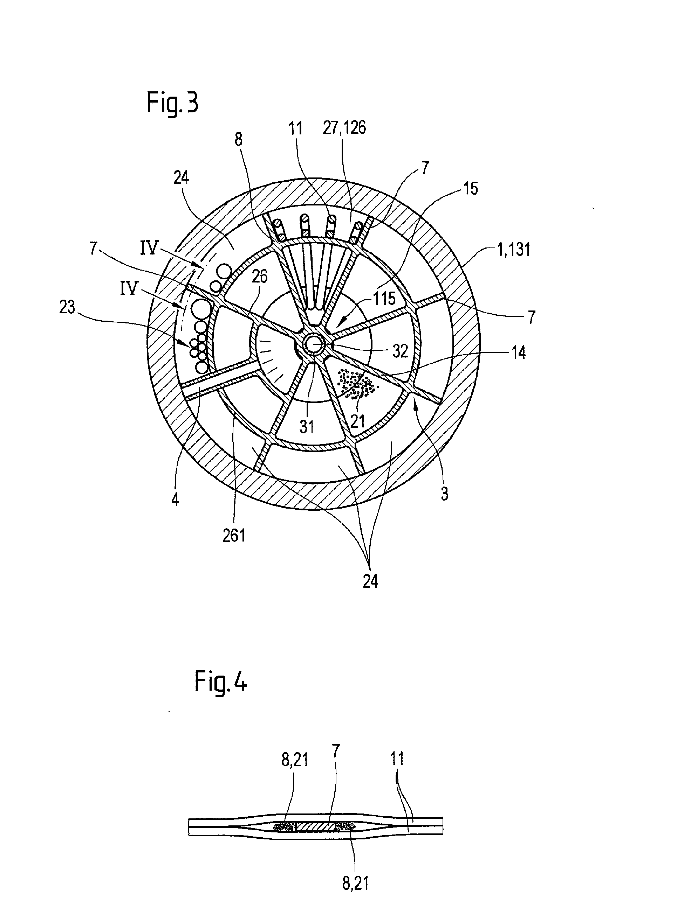

Zur manuellen Auffächerung des Kabelstranges 2 mit einem Durchmesser 28 von 30 mm wird der Fächer 3 über einen Adapter 4 (Fig. 3) in einem geeigneten Montagebrett, nicht dargestellt, fixiert. Die einzelnen Kabel 11 werden in den durch sternförmige Stege 7 und Umfangsring 261 gebildeten, äußeren Wannen 24 aufgeteilt. Der Durchmesser 29 von Wanne 24 zu Wanne 24 beträgt 120 mm. Die Kabel 11 besitzen unterschiedlich große Querschnitte und liegen zwischen den äußeren Stegen 7.
Zwischen den Kabeln 11 liegen Hohlräume.

Anschließend werden die Übergangsstellen 121 durch Kabelbinder 12 fixiert. Die Übergangsstellen 121 definieren den eingehenden und ausgehenden, dicht gebündelten Kabelabschnitt 122 und 123 sowie den aufgefächerten bzw. aufgespleisten Kabelabschnitt 124.

Anschließend wird die Tülle 1 über den aufgespleisten Kabelabschnitt 124 gezogen. Der Fächer 3 liegt dann in dem Längsquerschnitt 114 der Tülle 1 mit umfangsseitigen radialen Spalten 125 und Hohlraum 126. Hierbei dichten die zylindrischen Mundstücke 133 mit den Verstärkungsringen 134 den ein- und abhegenden Kabelstrang 2 weitgehend vollständig ab, in dem diese die genannten Kabelstränge 2 zusammendrücken. Die Tülle 1 wird als Druckbehälter benutzt. Durch Überfüllung der Tülle 1 mit einem gängigen Schaum bzw. Dichtmasse 21 über einen Schlauch 18 mit Ventil 17 (Fig. 1) wird der entstehende Überdruck ausgenutzt, damit die Dichtmasse 21 in den, durch Abstandhalter 5 bewirkten Kammern 13 und in allen möglichen Fugen, Spalten 125, Hohlraum 126 eindringen und aushärten kann.

Anstelle der Injektion der Dichtmasse 21 in die Tülle 1 durch den mittig angeordneten Schlauch 18 kann die Dichtmasse 21 auch durch die Gummiwandung 25 direkt in die Tülle 1 erfolgen. Damit wird ebenfalls ein sauberes Befüllen der Tülle 1 erreicht.

Es liegt eine einwandfreie Rückhaltung der flüssigen Dichtmasse 21 vor. In der Tülle 1, also auch innerhalb des Fächers 3 besteht eine gleichmäßige Druckverteilung der Dichtmasse 21.

Mittels des Adapters 4 ist der Fächer 3 bei Brettmontage exakt vorpositionierbar. Damit erlaubt der Fächer 3 die Vorfixierung der Kabel 11 durch Kabelbinder 12.

Die äußeren Stege 7 (Fig. 4) des Fächers 3 gewährleisten, daß im gefächerten Kabelabschnitt 124 Schlitze entstehen. Durch diese Schlitze strömt die Dichtmasse 21 radial in die äußeren Kammern 13 und Spalte 125 über.
Die inneren Stege 26 gewährleisten, daß die Dichtmasse 21 sich durch große Öffnungen 15 im Längsquerschnitt 114 frei verteilt.
Die äußeren Stege 7 dienen auch zur Positionierung des Fächers 3 in der Tülle 1.

Die äußeren Wannen 24 dienen zur Vorfixierung der Einzelkabel 11 durch die Kabelbinder 12.
Die Abstandshalter 5 und Kammern 13 gewährleisten eine sichere Abdichtung.

Die Ausbildung der Fuge 19 im Außenbereich der Tülle 1 läßt die Abdichtung zum Blech 111 bei jeglicher Aufblähung und Verformung der Tülle 1 unbeeinflusst.

Durch die Füllung des gesamten Innenquerschnitts 13, 114, 125, 126 der Tülle 1 mit Dichtmasse 21 ist eine sehr gute Geräuschisolation gegeben. Mit der Erfindung ist eine Anpassung der Tülle 1 an alle Lochdurchmesser und Dicken des Bleches 111 ohne weiteres möglich. Die Anpassung an unterschiedliche Montagerichtungen ist problemfrei. Ebenso ist eine Anpassung an alle Kabelstrang-Durchmesser möglich. Die Blechmontage der Tülle 1 mit und ohne Kunststoffklipp ist ebenfalls möglich. Erfindungsgemäß wird die Längswasserabdichtung des Kabelstranges 2 sicher erreicht. Eine Kappilarwirkung tritt nicht auf. Die erfindungsgemäße Kabelstrang-Abdichtung ist kostengünstig und prozeßsicher.

## Patentansprüche

1. Elastische Tülle für einen Kabelstrang,
wobei die Tülle umfangseitig in einer fahrzeugseitigen Öffnung einer Wand sitzt und
jeweils endseitig den Kabelstrang elastisch fixiert,
**dadurch gekennzeichnet,**
**daß** in der Tülle (1) zur Separierung und Aufspreizung wenigstens zweier Kabel (11) ein Rasterteil bzw. Fächer (3) angeordnet ist,
durch dessen Stege (7) wenigstens ein erstes Kabel (11) getrennt von einem zweiten Kabel (11) geführt ist und
der verbleibende Hohlraum (27) von einer Dichtmasse (21) ausgefüllt ist.

2. Tülle nach Anspruch 1,
**dadurch gekennzeichnet,**
**daß** die Tülle (1) einen etwa kreisförmigen oder eckigen Längsquerschnitt (114) mit einander gegenüber liegenden Öffnungen (115) aufweist.

3. Tülle nach Anspruch 1,
**dadurch gekennzeichnet,**
**daß** der Fächer (3) sternförmige Stege (26, 7) besitzt.

4. Tülle nach Anspruch 3,
**dadurch gekennzeichnet,**
**daß** der Fächer (3) einen Adapter (4) zur Brettmontage aufweist, wobei der Adapter (4) anstelle eines Steges (26, 7) sitzt.

5. Tülle nach Anspruch 1,
**dadurch gekennzeichnet,**
**daß** der Fächer (3) einen zentralen Ring (31) mit durchgehender Bohrung (32) und daran aufsitzenden Stegen (26, 7), sowie wenigstens einen Umfangsring (261) mit Wannen (24) aufweist und
der Kabelstrang (2) bis zum 10-fachen seines Durchmessers (28) aufspreizbar ist.

6. Tülle nach Anspruch 3,
**dadurch gekennzeichnet,**
**daß** mit dem Fächer (3) ein Schlauch (18) zum Befüllen des Innenraums (126) der Tülle (1) mit der Dichtmasse (21) verbunden ist.

7. Tülle nach Anspruch 6,
**dadurch gekennzeichnet,**
**daß** der Schlauch (18) mit einem Ventil (17) versehen ist.

8. Tülle nach Anspruch 1,
**dadurch gekennzeichnet,**
**daß** die elastischen Mundstücke (133) der Tülle (1) mit einer gewissen Vorspannung den Kabelstrang (2) bzw. die Kabel (11) flüssigkeitsdicht umschließen oder zwischen der Innenseite der Mundstücke und dem Kabelstrang (2) oder den Kabeln (11) ein Adapter vorgesehen ist.

9. Tülle nach Anspruch 1,
**dadurch gekennzeichnet,**
**daß** die Tülle (1) elastische Ringzonen (16) in Form einer konischen Außenwand (132) und formversteifende Abstandhalter (5) aufweist.

10. Tülle nach Anspruch 1,
**dadurch gekennzeichnet,**
**daß** der Fächer (3) mit dem Kabelstrang (2) in einem kreisförmigen Längsquerschnitt (114) der Tülle (1) positioniert ist.

11. Tülle nach Anspruch 1,
**dadurch gekennzeichnet,**
**daß** an der Innenwand der Tülle (1) Abstandshalter (5) und durch die Dichtmasse (21) befüllbare Kammern (13) vorgesehen sind.
